# EUROPEAN PATENT SPECIFICATION

(11) **EP 4 355 026 B1**
(45) Date of publication and mention of the grant of the patent: **10.09.2025**
(21) Application number: 22382973.0
(22) Date of filing: 13.10.2022
(51) Int. Cl.: H05B 1/02, H05B 3/26

(54) **HEATING PLATE**
HEIZPLATTE
PLAQUE CHAUFFANTE

(43) Date of publication of application: 17.04.2024
(73) Proprietor: BORGWARNER EMISSIONS SYSTEMS SPAIN, S.L.U., 36315 Vigo Pontevedra (ES)
(72) Inventor: FOLGAR, Miguel, E-36618 Vilagarcia de Arousa, Pontevedra (ES); JULIANA, Rafael, E-36315 Vigo, Pontevedra (ES); BLANCO, Alberto, E-36315 Vigo, Pontevedra (ES)
(74) Representative: ABG Intellectual Property Law, S.L.

(56) References cited:
- EP-A1- 3 616 949
- EP-B1- 0 966 218
- CN-A- 108 449 814
- FR-A1- 2 994 891
- US-A1- 2022 086 957

## Description

### OBJECT OF THE INVENTION

The present invention relates to a heating plate particularly suitable for devices for heating a thermal fluid. The heat generated in this device is transferred to other locations through the thermal fluid, where the heat is given off, for example, through a heat exchanger configured as a radiator.

The heating plate is characterized by an electronics-free safety solution intended to automatically cause the generation of heat to cease when temperatures above a preestablished safety temperature are reached.

### BACKGROUND OF THE INVENTION

One of the fields of the art that is becoming increasingly more relevant today is the design of devices specifically adapted to electric vehicles.

In internal combustion engines there is a very high amount of energy that is lost in the form of heat generated during combustion. While a large part of the heat ends up being lost and dumped into the atmosphere, it can also be used primarily to heat the interior or other parts of the engine, for example, before reaching the operating temperature.

This heat source is missing in an electric vehicle, so the interior must be heated from the energy stored in batteries and by using resistive elements which heat up by the Joule effect by forcing current to pass therethrough.

There are several elements to be heated, for example, the vehicle interior, the battery pack to prevent the batteries from not reaching temperatures below a predetermined minimum temperature to ensure the correct operation thereof, and others.

In these cases in which there are several elements to be heated, a very suitable solution uses a device where the heat is generated, a thermal fluid which allows the transfer of the heat to the various points of the vehicle, and heat exchangers serving as an element for transferring heat from the thermal fluid to the element or space to be heated.

In these cases in which there is a heat generation device that transfers the heat generated to a thermal fluid, the device comprises a heating plate with resistive elements for generating heat and a heat exchange area to exchange heat with the thermal fluid to cause its temperature to rise.

Resistive elements are elements that allow the passage of current but with a resistance value sufficient for the passage of current to cause the electrical energy to dissipate, being transformed into thermal energy and raising the temperature of the resistive element. All of the electrical energy supplied by the batteries is transformed into heat.

The rise in temperature cannot be such that a certain maximum temperature is exceeded or the resistive element and, therefore, the heating device, will otherwise be damaged.

The correct transfer of the generated heat to the thermal fluid limits the temperature of the resistive elements. However, any factor that hinders heat transfer to the thermal fluid causes the temperature to exceed the maximum safety temperature and damage to occur.

Temperature limitation mechanisms which work using sensors that measure the temperature by generating a signal indicative of the measured temperature are known. This signal is processed and used to carry out a safety action, for example, by cutting off the power supply of the heating device.

With this configuration, several devices which increase the price and the complexity of the device are required, such as: a sensor, signal processing means, and means for acting on the power supply of the heating device. Furthermore, these means are often outside of the device, so safety is not guaranteed by the device itself but rather by the correct operation of other devices in charge of managing this signal and cutting off the current.

The present invention solves the problem of overheating by establishing a configuration of the heating plate that automatically prevents damage to the resistive elements and to the entire heating device without incorporating complex auxiliary devices ensuring the integrity thereof.

Document EP0966218 B1 relates to a heating element for heating a water-bed.

Document US2022/086957 A1 relates to a heating element having a fuse function.

Document CN108449814 A relates to a heater, including a metal matrix layer, an insulating medium layer sintered on the metal matrix layer, a first electrode a second electrode and a heating resistor sintered on the insulating medium layer. The heater also comprises a thermal fuse sintered on the insulating medium layer.

Document EP3616949 A1 relates to a heating device for use in vehicles, particularly to a device for heating a fluid, for example air, water, or liquid coolant.

Document FR2994891 A1 relates to an electric fluid heating device for a motor vehicle.

### DESCRIPTION OF THE INVENTION

Aluminum or copper are metals that are considered electrically conductive due to their low resistivity value. Only special materials such as superconductors have resistivity values of zero or considered to be zero.

However, throughout this description, the term "conductor" is interpreted as a material that, even though it has a certain resistivity value, although low, not only allows the passage of electric current but also the dissipation of electric energy in the form of heat by the Joule effect produced by its resistivity is negligible compared to other heat transfer or generation effects existing in the same conductor.

In the context of the present invention, the possible generation of heat by the Joule effect in a conductor has an effect on the rise in temperature that is considered negligible.

In the context of the present invention, a conductive element is in thermal contact with the substrate and with a surrounding atmosphere. Heat transfer mechanisms primarily consist of conduction with the substrate and convection with the surrounding atmosphere, giving rise to temperature gradients in the conductive element due the thermal inertia of the conductive element determined by the heat capacity thereof. The temperature differences at different points of the conductive element due to the gradients caused by thermal inertia are one way of considering temperature variations that are not relevant or are considered negligible, mainly when compared with the temperature values of the same conductive element when the device is at room temperature because it is inoperative.

When the temperature variations caused by the Joule effect of the conductive element due to the passage of current therethrough are of the same order as or lower than these temperature variations caused by inertial effects, it can be said that the rise in temperature effect caused by the Joule effect upon the passage of current is negligible.

Likewise, "resistive material" shall be interpreted in this application as a material that has a resistivity value and a configuration such that the resistivity causes a significant Joule effect, particularly intended for generating the heat to be transferred to the thermal fluid.

"Dielectric material" shall be interpreted in this application as a material that does not allow the passage of current or has negligible electrical conductivity.

A first aspect of the invention relates to a heating plate, comprising:
- *a substrate with a first face intended for being in contact with a thermal fluid to be heated, and a second face opposite the first face;*
- *a resistive element arranged on the substrate intended for generating heat in order to heat the thermal fluid;*
- *a power supply input port and output port to provide a power supply to the resistive element.*

The substrate is the support that allows, on one hand, the resistive element to be supported and, on the other hand, to give off the heat generated by the resistive element to the thermal fluid. According to the preferred examples, the configuration of the substrate is in the form of a plate, and according to a preferred example a flat plate, defined by a wall which is the one having a face on each side of the wall, one of them being intended to be in contact with the thermal fluid to give off the heat generated by convection.

That is, the term "plate" is to be interpreted in this application as the plate used in the theory of structures for those elements extending mainly in two different dimensions. In these cases, one of the three dimensions is defined by a certain thickness and is considerably smaller than the other two dimensions in which the plate extends. An example of a plate element is the wall of a thin-walled pipe.

In the context of the present invention, the examples of greatest interest use a flat plate or one that mostly extends in on plane, although it may have a certain relief pattern.

"Thermal fluid" is understood in this application as a fluid intended for receiving heat by convection from the heat source or from a heat transfer surface with which it is in contact and which is in turn heated by the heat source. The thermal fluid is also responsible for conveying the heat to other locations, given that it belongs to a fluid circuit that maintains a flow which is what allows the conveyance of the fluid with the heat received. This heat conveyed by the thermal fluid is given off in another location of the fluid circuit. The thermal fluid must preferably have a high heat capacity and not be corrosive in order to keep the conduits through which it circulates in good condition.

The resistive element is the heat generation element. The heat is generated by the Joule effect when the resistive element is polarized by passing a current therethrough. According to the preferred examples, the resistive element is configured in the form of flat tracks located on the substrate.

The resistive element is polarized by means of two power supply ports. The terms "input port" and "output port" will be used to distinguish between the two ports, although they do not physically have to correspond to the current input or the current output given that the direction of the current can be arbitrary, or according to one embodiment, the resistive element is even powered with an alternating current.

"Power supply port", "input port", or "output port" shall be interpreted in this application as a portion of conductive or resistive material in electrical contact with a supply point of the resistive element that has the function of providing current to the resistive element. For example, the output of a resistive element may be feeding the input of another resistive element, and in this case, the electrical connection between the first resistive element and the second resistive element falls within the interpretation of power supply port since it is the mode in which the second resistive element is supplied with current.

The heating plate further comprises:
- *a conductive element extending between a first end and a second end, the conductive element being made of a meltable material with a preestablished melting temperature; and wherein the first end of the conductive element is electrically connected to the resistive element and the second end of the conductive element is connected to a power supply input port or output port, such that the conductive element permits two states:*
   - *a first operative state establishing electrical continuity between the first end and the second end; and*
   - *a second cutoff state wherein the conductive element has been melted because it reached the melting temperature or a temperature higher than the melting temperature, giving rise to the severing of the conductive element, preventing the passage of current.*

The current feeding the resistive element passes through the conductive element given that it is interposed between a power supply input port or output port and the resistive element. According to one embodiment, the conductive element is a metal which, while it may have a certain resistivity, is configured with a section that is sufficient for the resulting resistance value to be very low and to generate a negligible amount of heat.

The conductive element is electrically connected to the resistive element and to an input port. These two physical connections cause the conductive element to also exchange heat with the surrounding components by conduction, and when the surrounding area is a fluid, for example air or gas, to also exchange heat by convection. This results in the conductive element tending to have a temperature equal to the temperature of the rest of the components of the heating plate.

The conductive element has a preestablished melting temperature. It melts when it reaches this temperature, transitioning to a liquid state and no longer being a solid element that retains its shape. This results in the severing of the element which, up until that time, has maintained the electrical connection between its ends, and, therefore, the resistive element no longer conveys current.

The melting of the conductive element gives rise to an irreversible process, causing the heating plate to stop generating heat in this critical situation of a rise in temperature and enter a safe mode.

The state of the conductive element before reaching this melting temperature is the one identified as the first operative state, and the state of the conductive element once it has been severed by the melting is the one identified as the second cutoff state.

Once the second cutoff state has been reached, the resistive element stops generating heat and the material of the conductive element transitions back to a solid state, but at this time without establishing electrical communication between the power supply port and the resistive element.

The value of the current has no influence on this process except indirectly if the device reaches a temperature which is considered unsuitable. It is said to have no influence because the passage of current through the conductive element does not generate heat or it has a negligible value, and the melting thereof is not caused by the current going through it. In fact, the value of the section of the conductive element must be sufficient for this to be the case.

Even the value of the current can be raised in the form of pulses given that an example of great interest in heat regulation uses a pulse-width modulation (PWM) power supply.

In this process, the intervention of external safety devices is not necessary either.

According to the invention, *the conductive element is spaced from the substrate.*

The spacing of the conductive element means that the heat that it receives or gives it establishing its temperature does not depend directly on the substrate but rather on processes of transfer by conduction at its ends or by convection through the medium surrounding the conductive element. The substrate supports the resistive element that generates the heat of the heating plate, so according to this embodiment, the change of state of the conductive element from the first operative state to the second cutoff state is not caused by temperature peaks of the substrate but rather when the rise in temperature is more persistent over time, raising the temperature in several components which are the ones that establish the temperature of the conductive element, even if it is with intermediate heat transfer mechanisms.

According to another embodiment of the invention, *between the first end of the conductive element and the resistive element there is a first conductive support element, and between the second end of the conductive element and the resistive element there is a second conductive support element.*

One of the embodiments of the resistive element is the use of materials with a high oxide content to determine the resistivity value and that it is suitable for generating heat by the Joule effect. Most of these materials do not establish a suitable attachment with the conductive element, so according to this embodiment, another conductive interfacing support element is used. According to a specific mode of this example, the conductive support elements are metals added by deposition or by melting giving rise to close attachment and generating a conductive area suitable for the connection of the conductive element. That is, *the first support element, the second support element, or both are depositions of a metallic material provided by spraying or by melting the metallic material.*

According to another embodiment of the invention, *the resistive element is installed on the second face of the substrate.*

In this embodiment, the substrate incorporates on one of its faces, the second face, the resistive element intended for generating heat, and it is on the opposite face, the first face, where the heat generated is transferred to the thermal fluid. The heat generated on the second face is transferred by conduction to the first face. With this configuration, the substrate establishes a barrier between the low electrical voltage area and the area with thermal fluid which could transfer electrical discharges to all parts of a vehicle, for example.

A dielectric material must be interposed between the thermal fluid and any element subject to a power supply or which is set at an electrical potential.

According to another embodiment of the invention, *the substrate is a metallic plate with a dielectric coating at least on the face on which the resistive element is located.*

In this embodiment, the substrate has a structural function formed by a metallic plate favoring heat conduction, particularly suitable when the resistive element is located on one side of the substrate and the thermal fluid is on the opposite side. The fact that the dielectric material establishing the insulating barrier is configured in the form of a coating means that the structural and high thermal conduction properties are ensured by the metallic plate, and the penalty in heat conduction imposed by a dielectric material, usually also poor heat conductors, is minimized in the form of a coating.

According to another embodiment of the invention, *the resistive element is one or more flat tracks.*

A configuration in the form of flat tracks gives rise to a resistive element the paths of which can be easily defined. Given that the length of the resistive element in practice must be long, an example for including the resistive element in a small area is with zig-zag paths to favor the compaction thereof. The use of tracks allows the implementation of, for example, printing techniques to define the paths and the width. The width in a configuration in the form of track allows the section to be established in a precise manner when the thickness is predetermined. For example, wide regions of the same material reduce the generation of heat that can be found in other locations where the track has a smaller width and corresponds to a preestablished path between the power supply input port and the power supply output port.

Likewise, a configuration in the form of tracks also gives rise to a flat and compact configuration of the device as a result of incorporating the heating plate.

According to a more specific embodiment, *the resistive element is a resistive metallic coating provided by spraying metallic particles onto the support.*

Tracks thus built have a higher melting temperature than tracks normally used with metal oxides. In an abnormal situation where the heating plate is fed with high current and maintained over time, the heat generated raises the temperature of the device, which can give rise to very high temperatures, even in the casing that is close to or in contact with other components of the vehicle or even the user. It is in these cases where the tracks are not destroyed that an automated cutoff solution is particularly useful.

According to another embodiment of the invention, *the conductive element is a metallic bar or wire rope with a section adapted for the power supply such that the current density for feeding the resistive element causes a negligible heating effect.*

The configuration in the form of a metallic bar or wire rope is particularly suitable for the conductive element because it is elongated since, when melting due to its temperature rise, droplets or shapes imposed by its surface tension are formed, which tend to concentrate the metal in the regions close to both ends of the conductive element and maybe isolated droplets located in the central area.

In a specific example, the conductive element has a smaller section in its central area in order to favor the retraction of the molten material towards the ends, favoring the severing and current cutoff. In this example, even the area having a smaller section must have a section sufficient for the maximum current not to generate heat.

According to another embodiment of the invention, *the conductive element has releasable fixing means which allow the replacement thereof when the conductive element has reached the second cutoff state.*

Safety protection according to any of the described examples results in the components of the device remaining undamaged given that most of the causes of overheating can be external to the components of the heating device. The possibility of replacing the conductive element with a new one that is in the first operative state means that the repair is easy. Simply removing and cleaning the residues of the first conductive element and replacing it with a second conductive element is sufficient.

According to a preferred embodiment, *the substrate is a flat plate.* This configuration is particularly suitable because it is easy to manufacture and also because it favors additional processes related to the addition of the resistive element in the form of tracks.

According to another embodiment, *the first end of the conductive element, the second end of the conductive element, or both comprise a dielectric coating to prevent electric arcs with the molten material of the conductive element when it has reached the second state.*

When the change of state of the conductive element takes place, the melting of the material gives rise to configurations of the molten material, which is preferably metallic, which are not under control. They depend on the position and orientation of the substrate, on the direction of the action of gravity, on the surface tension of the liquid of the molten material, etc.

The term "liquid" is used for the molten state, although it is to be interpreted in a generic manner throughout the description, where other possible intermediate states in the form of a pasty fluid are possible depending on the meltable material used. The material must be such that it loses its shape retaining capacity due to melting.

When the material melts, it usually retracts towards the ends, generating not only the severing, cutting off the current, but also increasing the distance between points that are now under a potential that can be very high. There are power supply devices today operating at 800 V, for example. In these circumstances, there is a danger of arcing, mainly with high electric fields, that can be generated in regions with very small radii of curvature. Likewise, droplets or portions of molten material that have not retracted towards either end may appear, leaving intermediate islands that may favor two arcs that finally communicate the ends to be severed.

According to this embodiment, the addition of a dielectric coating on the ends of the conductive element has been observed to prevent the occurrence of electrical arcing between either end and another component that is at a different potential by also minimizing the occurrence of electrical arcing between the ends when there are portions of molten conductive material in intermediate areas.

A second aspect of the invention relates to a heating device, comprising:
- *an inlet for a thermal fluid;*
- *an outlet for a thermal fluid;*
- *a first chamber in fluid communication with the inlet for the thermal fluid and the outlet for the thermal fluid;*
- *a heating plate according to any of the examples described above, positioned with the first face oriented towards a first chamber.*

According to a specific example, *the heating device further comprises a second chamber which is leak-tight with respect to the first chamber, wherein the second face is oriented towards the second chamber intended for housing elements subjected to electrical charges.*

According to this more specific example, the electrical and electronic components as well as the thermal fluid are located in separate chambers to prevent discharges through the thermal fluid flowing into and out of the device.

A third aspect of the invention relates to a *method of protection of a heating plate, the heating plate comprising:*
- *a substrate with a first face intended for being in contact with a thermal fluid to be heated, and a second face opposite the first face;*
- *a resistive element arranged on the substrate intended for generating heat in order to heat the thermal fluid;*
- *a power supply input port and output port to provide a power supply to the resistive element;*
*the method comprising the steps of:*
*interposing between a supply port and the resistive element a conductive element made of a meltable material with a preestablished melting temperature for protection against the excessive rise in temperature, wherein the conductive element is spaced from the substrate;*
*in the operating mode, feeding the resistive element through the conductive element such that the conductive element permits two states:*
   *- a first operative state establishing electrical continuity between the first end and the second end;*
   *- a second cutoff state wherein the conductive element has been melted because it reached the melting temperature or a temperature higher than the melting temperature, giving rise to the severing of the conductive element, preventing the passage of current.*

### DESCRIPTION OF THE DRAWINGS

These and other features and advantages of the invention will become more apparent from the following detailed description of a preferred embodiment, given solely by way of illustrative and non-limiting example in reference to the attached figures.
- Figure 1: This figure schematically shows an embodiment of the heating plate according to a cross-section. In this embodiment, the elements are not to scale and some components have been oversized to favor viewing and comprehension.
- Figure 2: This figure schematically shows an embodiment of the heating device including the heating plate from the embodiment in the previous figure. This embodiment is also shown according to a cross-section.

### DETAILED DESCRIPTION OF THE INVENTION

According to the first inventive aspect, the present invention relates to a heating plate.

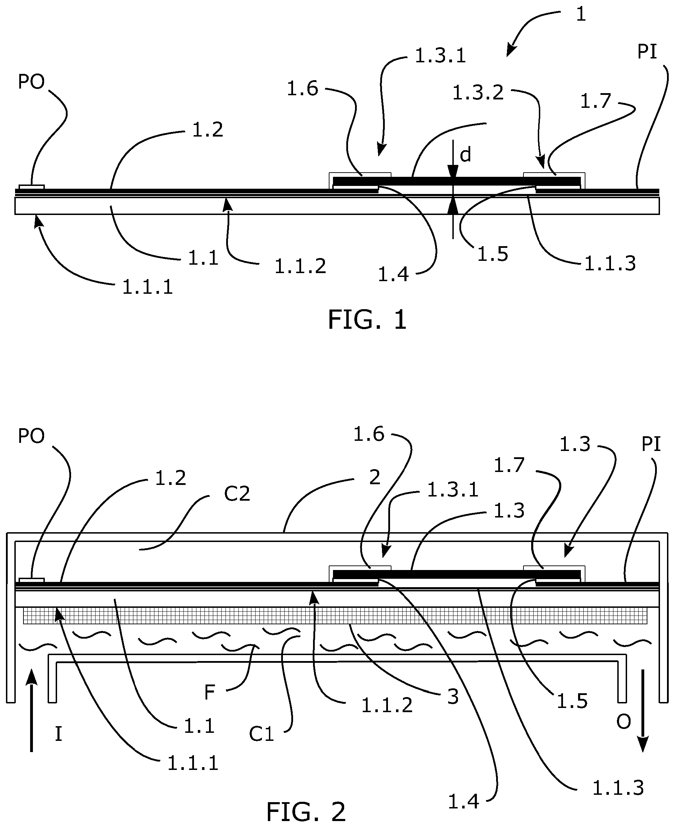

Figure 1 shows an embodiment of the heating plate (1), which is schematically shown and in which certain elements are oversized so as to allow better visual access both of these elements and of their arrangement relative to other components.

In this embodiment, the heating plate (1) is formed by a substrate (1.1) comprising a metallic plate, specifically made of steel, and a dielectric coating (1.1.3) which, using the orientation of the figure, is shown on the upper face.

This substrate (1.1), therefore, has a structural behavior given by the metallic plate and has a dielectric barrier between its two faces due to the presence of the dielectric coating (1.1.3).

In this substrate (1.1) formed by a composite wall, it is possible to distinguish a first face (1.1.1) oriented downwards and intended for being in contact with the thermal fluid (F), and a second face (1.1.2) oriented upwards which, in this specific example, is what serves as a support for a resistive element (1.2). The resistive element (1.2) is responsible for generating heat when it is in the operating mode. The heat generated passes through the substrate (1.1) by conduction and is transferred by convection to the thermal fluid (F) which is in contact through its first face (1.1.1).

In this embodiment, the resistive element (1.2) has been formed by spraying on metallic particles with a certain resistivity, giving rise to a resistive track deposited on the substrate (1.1). A specific form of a resistive track configuration is a track having a preestablished thickness and width and with a layout according to a zig-zag path, which increases its length, maintaining a compact shape.

Figure 1 shows an input port (PI) on the right side formed by a conductive element and an output port (PO) on the left side formed by another conductive element for the power supply of the resistive element (1.2). The supply is not direct but rather is by means of interposing a conductive element (1.3) shown with an elongated configuration between a first end (1.3.1) and a second end (1.3.2). The first end (1.3.1) of the conductive element (1.3) is in electrical communication with an end of the resistive element (1.2) and the second end (1.3.2) of the conductive element (1.3) is in electrical communication with the input port (PI). In this way, the electric polarization between the input port (PI) and the output port (PO) results in the electric polarization of the resistive element (1.2) due to the intermediation of the conductive element (1.3).

The conductive element (1.3) is made of a conductive and meltable material with a preestablished melting temperature. The preestablished temperature is the temperature at which the protection of the heating plate (1) is to be actuated to automatically cease the generation of heat.

According to this embodiment, the conductive element (1.3) is configured in the form of a metallic plate with a slightly choked section in its central area to favor, upon reaching the melting temperature, the severing of the meltable material into at least two parts that tend to retract towards both ends, moving away the parts that are at a different potential to prevent arcing.

Additionally, the conductive element (1.3) is located in two metallic support elements (1.5, 1.6). The metallic supports (1.5, 1.6) of this embodiment have a dual function: a first function as a connection interface with the resistive element (1.2) and the input port (PI), respectively, and a second function of generating a spacing (d) of the conductive element (1.3) with the substrate (1.1).

This spacing (d) favors there being no direct heat transfer by conduction between the substrate (1.1) and the conductive element (1.3). Therefore, an isolated temperature peak in the substrate (1.1) over time is not transmitted to the conductive element (1.3) since it requires the passage of heat by conduction through its ends or by convection through the air or gas surrounding the conductive element (1.3). This configuration confers certain thermal inertia to the conductive element (1.3) against peaks that should not give rise to the safety action of the conductive element (1.3), transitioning from the first operative state to the second cutoff state.

Figure 2 schematically shows a complete heating device, which comprises a casing (2) housing therein the heating plate (1) described in Figure 1. The heating plate (1) divides the inner space created inside the casing (2) into two chambers, a first chamber (C1) shown in the lower part intended for housing the thermal fluid (F) and a second chamber (C2) shown in the upper part in which all the components that are in the operating mode are subject to an electrical voltage.

In this embodiment, the heating plate (1) incorporates a set of fins to favor heat exchange between the metallic plate of the substrate (1.1) and the thermal fluid (F), said set of fins in this Figure 2 being represented by an area which is shown covered by a grid pattern.

The first chamber (C1) also shows an inlet (I) for the thermal fluid (F) and an outlet (O) for the thermal fluid (F), such that the thermal fluid receives the heat generated by the heating plate (1). This thermal fluid removes the heat generated by limiting the operating temperature of the heating plate (1). A failure in the flow of the thermal fluid (F), for example because an drive pump for pumping the flow of the thermal fluid (F) stops acting, is one of the causes of an unwanted rise in the temperature of the heating plate (1) since the heat generated is not discharged through the fluid (F) which would remain motionless in the first chamber (C1), progressively raising its temperature.

The resistive element (1.2) and also the conductive element (1.3) are located in the second chamber (C2). In this embodiment, the second chamber (C2) is occupied by air which is heated by the resistive element (1.2). This air heats the inner surface of the casing (2). The casing (2) is also heated by the support offered to the substrate (1.1), such that the entire exchange device can reach very high temperatures, such that it is also necessary to establish a safety limit.

The safety limit is determined by the conductive element (1.3) and its melting temperature.

Once the conductive element (1.3) reaches the melting temperature, it loses its shape and melts, causing at least one severed part cutting off the passage of current.

According to this embodiment, the ends of the conductive element (1.3) are coated with a dielectric coating (1.6, 1.7) to prevent electric arcs with the molten material of the conductive element (1.3) when it has reached the second state.

It has been observed that when melting occurs in the central region, the dielectric coating (1.6, 1.7) remains stable, which prevents electrical arcing.

The drawback of electrical arcing is not in the damage it causes, but rather the current through the resistive circuit is maintained generating heat.

## Claims

1. Heating plate (1), comprising:
- a substrate (1.1) with a first face (1.1.1) intended for being in contact with a thermal fluid (F) to be heated, and a second face (1.1.2) opposite the first face (1.1.1);
- a resistive element (1.2) arranged on the substrate (1.1) intended for generating heat in order to heat the thermal fluid (F);
- a power supply input port (PI) and an output port (PO) to provide a power supply to the resistive element (1.2);
- a conductive element (1.3) extending between a first end (1.3.1) and a second end (1.3.2), the conductive element (1.3) being made of a meltable material with a preestablished melting temperature; and wherein the first end (1.3.1) of the conductive element (1.3) is electrically connected to the resistive element (1.2) and the second end (1.3.2) of the conductive element (1.3) is connected to a power supply input port (PI) or output port (PO), such that the conductive element (1.3) permits two states:
- a first operative state establishing electrical continuity between the first end (1.3.1) and the second end (1.3.2); and
- a second cutoff state wherein the conductive element (1.3) has been melted because it reached the melting temperature or a temperature higher than the melting temperature, giving rise to the severing of the conductive element, preventing the passage of current;
**characterized in that** the conductive element (1.3) is spaced (d) from the substrate (1.1).

2. Heating plate (1) according to claim 1, wherein between the first end (1.3.1) of the conductive element (1.3) and the resistive element (1.2) there is a first conductive support element (1.5), and between the second end (1.3.2) of the conductive element (1.3) and the resistive element (1.2) there is a second conductive support element (1.6).

3. Heating plate (1) according to the preceding claim, wherein the first support element (1.5), the second support element (1.6), or both (1.5, 1.6) are depositions of a metallic material provided by spraying or by melting the metallic material.

4. Heating plate (1) according to any of claims 1 or 2, wherein the resistive element (1.2) is installed on the second face (1.1.2) of the substrate (1.1).

5. Heating plate (1) according to any of the preceding claims, wherein the substrate (1.1) is a metallic plate with a dielectric coating (1.3) at least on the face on which the resistive element (1.2) is located.

6. Heating plate (1) according to any of the preceding claims, wherein the resistive element (1.2) is one or more flat tracks.

7. Heating plate (1) according to claim 6, wherein the resistive element (1.2) is a resistive metallic coating provided by spraying metallic particles onto the substrate (1.1).

8. Heating plate (1) according to any of the preceding claims, wherein the conductive element (1.3) is a metallic bar or wire rope with a section adapted for the power supply such that the current density for feeding the resistive element (1.3) causes a negligible heating effect.

9. Heating plate (1) according to any of the preceding claims, wherein the conductive element (1.3) has releasable fixing means which allow the replacement thereof when the conductive element (1.3) has reached the second cutoff state.

10. Heating plate (1) according to any of the preceding claims, wherein the substrate (1.1) is a flat plate.

11. Heating plate (1) according to any of the preceding claims, wherein the first end (1.3.1) of the conductive element (1.3), the second end (1.3.2) of the conductive element (1.3), or both (1.3.1, 1.3.2) comprise a dielectric coating (1.6, 1.7) to prevent electric arcs with the molten material of the conductive element (1.3) when it has reached the second state.

12. Heating device, comprising:
- an inlet (I) for a thermal fluid (F);
- an outlet (O) for a thermal fluid (F);
- a first chamber (C1) in fluid communication with the inlet (I) for the thermal fluid (F) and the outlet (O) for the thermal fluid (F);
- a heating plate (1) according to any of the preceding claims positioned with the first face (1.1.1) oriented towards a first chamber (C1).

13. Heating device according to the preceding claim, further comprising a second chamber (C2) which is leak-tight with respect to the first chamber (C1), wherein the second face (1.1.2) is oriented towards the second chamber (C2) intended for housing elements subjected to electrical charges.

14. Method of protection of a heating plate (1), the heating plate (1) comprising:
- a substrate (1.1) with a first face (1.1.1) intended for being in contact with a thermal fluid (F) to be heated, and a second face (1.1.2) opposite the first face (1.1.1);
- a resistive element (1.2) arranged on the substrate (1.1) intended for generating heat in order to heat the thermal fluid (F);
- a power supply input port (PI) and an output port (PO) to provide a power supply to the resistive element (1.2);
the method comprising the steps of:
interposing between a supply port (PI, PO) and the resistive element (1.2) a conductive element (1.3) made of a meltable material with a preestablished melting temperature for protection against the excessive rise in temperature, wherein the conductive element (1.3) is spaced (d) from the substrate (1.1);
in the operating mode, feeding the resistive element (1.2) through the conductive element (1.3) such that the conductive element (1.3) permits two states:
- a first operative state establishing electrical continuity between the first end (1.3.1) and the second end (1.3.2);
- a second cutoff state wherein the conductive element (1.3) has been melted because it reached the melting temperature or a temperature higher than the melting temperature, giving rise to the severing of the conductive element, preventing the passage of current.

## Patentansprüche

1. Heizplatte (1), umfassend:
- ein Substrat (1.1) mit einer ersten Fläche (1.1.1), die dazu vorgesehen ist, mit einem zu erhitzenden Heizfluid (F) in Kontakt zu stehen, und einer der ersten Fläche (1.1.1) gegenüberliegenden zweiten Fläche (1.1.2);
- ein an dem Substrat (1.1) angeordnetes Widerstandselement (1.2) zur Erzeugung von Hitze zum Erhitzen des Heizfluids (F);
- einen Stromversorgungseingangsanschluss (PI) und einen Ausgangsanschluss (PO) zur Stromversorgung des Widerstandselements (1.2);
- ein leitfähiges Element (1.3), das sich zwischen einem ersten Ende (1.3.1) und einem zweiten Ende (1.3.2) erstreckt, wobei das leitfähige Element (1.3) aus einem schmelzbaren Material mit einer vorbestimmten Schmelztemperatur gebildet ist; und wobei das erste Ende (1.3.1) des leitfähigen Elements (1.3) mit dem Widerstandselement (1.2) elektrisch verbunden ist und das zweite Ende (1.3.2) des leitfähigen Elements (1.3) mit einem Stromversorgungseingangsanschluss (PI) oder einem Ausgangsanschluss (PO) derart verbunden ist, dass das leitfähige Element (1.3) zwei Zustände ermöglicht:
- einen ersten Betriebszustand, in dem eine elektrische Verbindung zwischen dem ersten Ende (1.3.1) und dem zweiten Ende (1.3.2) besteht; und
- einen zweiten, getrennten Zustand, in dem das leitfähige Element (1.3) aufgrund des Erreichens der Schmelztemperatur oder einer höheren Temperatur als der Schmelztemperatur geschmolzen ist, wodurch das leitfähige Element durchtrennt ist, so dass der Stromfluss unterbunden ist;
**dadurch gekennzeichnet, dass** das leitfähige Element (1.3) von dem Substrat (1.1) beabstandet (d) ist.

2. Heizplatte (1) nach Anspruch 1, wobei zwischen dem ersten Ende (1.3.1) des leitfähigen Elements (1.3) und dem Widerstandselement (1.2) ein erstes leitfähiges Stützelement (1.5) vorgesehen ist und zwischen dem zweiten Ende (1.3.2) des leitfähigen Elements (1.3) und dem Widerstandselement (1.2) ein zweites leitfähiges Stützelement (1.6) vorgesehen ist.

3. Heizplatte (1) nach einem der vorhergehenden Ansprüche, wobei das erste Stützelement (1.5), das zweite Stützelement (1.6), oder beide (1.5, 1.6) Ablagerungen aus einem metallischen Material sind, die durch Sprühen oder Schmelzen des metallischen Materials ausgebildet sind.

4. Heizplatte (1) nach einem der Ansprüche 1 oder 2, wobei das Widerstandselement (1.2) an der zweiten Fläche (1.1.2) des Substrats (1.1) angebracht ist.

5. Heizplatte (1) nach einem der vorhergehenden Ansprüche, wobei das Substrat (1.1) eine Metallplatte ist, die zumindest an der Fläche, an welcher sich das Widerstandselement (1.2) befindet, eine dielektrische Beschichtung (1.3) aufweist.

6. Heizplatte (1) nach einem der vorhergehenden Ansprüche, wobei das Widerstandselement (1.2) aus einer oder mehreren flächigen Bahnen gebildet ist.

7. Heizplatte (1) nach Anspruch 6, wobei das Widerstandselement (1.2) eine Widerstandsmetallbeschichtung ist, die durch Sprühen von Metallpartikeln auf das Substrat (1.1) ausgebildet ist.

8. Heizplatte (1) nach einem der vorhergehenden Ansprüche, wobei das leitfähige Element (1.3) ein Metallstab oder ein Drahtseil mit einem Abschnitt ist, der derart für die Stromversorgung ausgebildet ist, dass die Stromdichte zur Versorgung des Widerstandselements (1.3) eine vernachlässigbare Heizwirkung ausübt.

9. Heizplatte (1) nach einem der vorhergehenden Ansprüche, wobei das leitfähige Element (1.3) ein lösbares Befestigungsmittel aufweist, welches den Austausch desselben ermöglicht, wenn das leitfähige Element (1.3) den zweiten, getrennten Zustand erreicht hat.

10. Heizplatte (1) nach einem der vorhergehenden Ansprüche, wobei das Substrat (1.1) eine flächige Platte ist.

11. Heizplatte (1) nach einem der vorhergehenden Ansprüche, wobei das erste Ende (1.3.1) des leitfähigen Elements (1.3), das zweite Ende (1.3.2) des leitfähigen Elements (1.3), oder beide (1.3.1, 1.3.2) eine dielektrische Beschichtung (1.6, 1.7) zur Verhinderung von Lichtbögen mit dem geschmolzenen Material des leitfähigen Elements (1.3) nach dem Erreichen des zweiten Zustands umfassen.

12. Heizvorrichtung, umfassend:
- einen Einlass (I) für ein Heizfluid (F);
- einen Auslass (O) für ein Heizfluid (F);
- eine erste Kammer (C1), die mit dem Einlass (I) für das Heizfluid (F) und dem Auslass (O) für das Heizfluid (F) in Fluidverbindung steht;
- eine Heizplatte (1) nach einem der vorhergehenden Ansprüche, die mit der ersten Fläche (1.1.1) der ersten Kammer (C1) zugewandt angeordnet ist.

13. Heizvorrichtung nach dem vorhergehenden Anspruch, des Weiteren umfassend eine zweite Kammer (C2), die gegenüber der ersten Kammer (C1) leckdicht ausgebildet ist, wobei die zweite Fläche (1.1.2) der zweiten Kammer (C2) zugewandt ist, die zur Aufnahme von mit elektrischen Ladungen beaufschlagten Elementen ausgebildet ist.

14. Verfahren zum Schutz einer Heizplatte (1), wobei die Heizplatte (1) Folgendes umfasst:
- ein Substrat (1.1) mit einer ersten Fläche (1.1.1), die dazu vorgesehen ist, mit einem zu erhitzenden Heizfluid (F) in Kontakt zu stehen, und einer der ersten Fläche (1.1.1) gegenüberliegenden zweiten Fläche (1.1.2);
- ein an dem Substrat (1.1) angeordnetes Widerstandselement (1.2) zur Erzeugung von Hitze zum Erhitzen des Heizfluids (F);
- einen Stromversorgungseingangsanschluss (PI) und einen Ausgangsanschluss (PO) zur Stromversorgung des Widerstandselements (1.2);
wobei das Verfahren die folgenden Schritte umfasst:
Zwischenordnen eines leitfähigen Elements (1.3) zwischen einen Versorgungsanschluss (PI, PO) und dem Widerstandselement (1.2), wobei das leitfähige Element (1.3) zum Schutz vor einem übermäßigen Temperaturanstieg aus einem schmelzbaren Material mit einer vorbestimmten Schmelztemperatur gebildet ist, wobei das leitfähige Element (1.3) von dem Substrat (1.1) beabstandet (d) ist;
im Betriebsmodus Versorgen des Widerstandselements (1.2) über das leitfähige Element (1.3) derart, dass das leitfähige Element (1.3) zwei Zustände ermöglicht:
- einen ersten Betriebszustand, in dem eine elektrische Verbindung zwischen dem ersten Ende (1.3.1) und dem zweiten Ende (1.3.2) besteht;
- einen zweiten, getrennten Zustand, in dem das leitfähige Element (1.3) aufgrund des Erreichens der Schmelztemperatur oder einer höheren Temperatur als der Schmelztemperatur geschmolzen ist, wodurch das leitfähige Element durchtrennt ist, so dass der Stromfluss unterbunden ist.

## Revendications

1. Plaque chauffante (1), comprenant :
- un substrat (1.1) avec une première face (1.1.1) destinée à être en contact avec un fluide thermique (F) à chauffer, et une deuxième face (1.1.2) opposée à la première face (1.1.1) ;
- un élément résistif (1.2) disposé sur le substrat (1.1) destiné à générer de la chaleur afin de chauffer le fluide thermique (F) ;
- un port d'entrée d'alimentation électrique (PI) et un port de sortie (PO) pour fournir une alimentation électrique à l'élément résistif (1.2) ;
- un élément conducteur (1.3) s'étendant entre une première extrémité (1.3.1) et une seconde extrémité (1.3.2), l'élément conducteur (1.3) étant constitué d'un matériau fusible ayant une température de fusion préétablie ; et dans lequel la première extrémité (1.3.1) de l'élément conducteur (1.3) est connectée électriquement à l'élément résistif (1.2) et la deuxième extrémité (1.3.2) de l'élément conducteur (1.3) est reliée à un port d'entrée (PI) ou de sortie (PO) de l'alimentation électrique, de sorte que l'élément conducteur (1.3) permet deux états :
- un premier état de fonctionnement établissant une continuité électrique entre la première extrémité (1.3.1) et la seconde extrémité (1.3.2) ; et
- un deuxième état de coupure dans lequel l'élément conducteur (1.3) a été fondu parce qu'il a atteint la température de fusion ou une température supérieure à la température de fusion, ce qui entraîne la rupture de l'élément conducteur et empêche le passage du courant ;
**caractérisé en ce que** l'élément conducteur (1.3) est espacé (d) du substrat (1.1).

2. Plaque chauffante (1) selon la revendication 1, dans laquelle entre la première extrémité (1.3.1) de l'élément conducteur (1.3) et l'élément résistif (1.2) se trouve un premier élément de support conducteur (1.5), et entre la deuxième extrémité (1.3.2) de l'élément conducteur (1.3) et l'élément résistif (1.2) se trouve un deuxième élément de support conducteur (1.6).

3. Plaque chauffante (1) selon la revendication précédente, dans laquelle le premier élément de support (1.5), le second élément de support (1.6), ou les deux (1.5, 1.6) sont des dépôts d'un matériau métallique obtenus par pulvérisation ou par fusion du matériau métallique.

4. Plaque chauffante (1) selon l'une des revendications 1 ou 2, dans laquelle l'élément résistif (1.2) est installé sur la deuxième face (1.1.2) du substrat (1.1).

5. Plaque chauffante (1) selon l'une quelconque des revendications précédentes, dans laquelle le substrat (1.1) est une plaque métallique avec un revêtement diélectrique (1.3) au moins sur la face sur laquelle se trouve l'élément résistif (1.2).

6. Plaque chauffante (1) selon l'une des revendications précédentes, dans laquelle l'élément résistif (1.2) est une ou plusieurs pistes plates.

7. Plaque chauffante (1) selon la revendication 6, dans laquelle l'élément résistif (1.2) est un revêtement métallique résistif obtenu par pulvérisation de particules métalliques sur le substrat (1.1).

8. Plaque chauffante (1) selon l'une quelconque des revendications précédentes, dans laquelle l'élément conducteur (1.3) est une barre ou un câble métallique dont la section est adaptée à l'alimentation électrique de telle sorte que la densité de courant pour alimenter l'élément résistif (1.3) provoque un effet de chauffage négligeable.

9. Plaque chauffante (1) selon l'une quelconque des revendications précédentes, dans laquelle l'élément conducteur (1.3) possède des moyens de fixation amovibles qui permettent de le remplacer lorsque l'élément conducteur (1.3) a atteint le deuxième état de coupure.

10. Plaque chauffante (1) selon l'une des revendications précédentes, dans laquelle le substrat (1.1) est une plaque plate.

11. Plaque chauffante (1) selon l'une quelconque des revendications précédentes, dans laquelle la première extrémité (1.3.1) de l'élément conducteur (1.3), la seconde extrémité (1.3.2) de l'élément conducteur (1.3), ou les deux (1.3.1, 1.3.2) comprennent un revêtement diélectrique (1.6, 1.7) pour empêcher les arcs électriques avec le matériau en fusion de l'élément conducteur (1.3) lorsqu'il a atteint le deuxième état.

12. Dispositif de chauffage comprenant :
- une entrée (I) pour un fluide thermique (F) ;
- une sortie (O) pour un fluide thermique (F) ;
- une première chambre (C1) en communication fluidique avec l'entrée (I) de la pompe à chaleur (F) et la sortie (O) du fluide thermique (F) ;
- une plaque chauffante (1) selon l'une quelconque des revendications précédentes, positionnée avec la première face (1.1.1) orientée vers une première chambre (C1).

13. Dispositif de chauffage selon la revendication précédente, comprenant en outre une seconde chambre (C2) étanche par rapport à la première chambre (C1), dans laquelle la seconde face (1.1.2) est orientée vers la seconde chambre (C2) destinée à loger des éléments soumis à des charges électriques.

14. Procédé de protection d'une plaque chauffante (1), la plaque chauffante (1) comprenant :
- un substrat (1.1) avec une première face (1.1.1) destinée à être en contact avec un fluide thermique (F) à chauffer, et une deuxième face (1.1.2) opposée à la première face (1.1.1) ;
- un élément résistif (1.2) disposé sur le substrat (1.1) destiné à générer chaleur afin de chauffer le fluide thermique (F) ;
- un port d'entrée d'alimentation électrique (PI) et un port de sortie (PO) pour fournir une alimentation électrique à l'élément résistif (1.2) ;
la méthode comprenant les étapes suivantes :
- interposer entre un port d'alimentation électrique (PI, PO) et l'élément résistif (1.2) un élément conducteur (1.3) constitué d'un matériau fusible ayant une température de fusion préétablie pour la protection contre l'élévation excessive de la température, l'élément conducteur (1.3) étant espacé (d) du substrat (1.1) ;
en mode de fonctionnement, en alimentant l'élément résistif (1.2) à travers l'élément conducteur (1.3) de telle sorte que l'élément conducteur (1.3) permette deux états :
- un premier état de fonctionnement établissant une continuité électrique entre la première extrémité (1.3.1) et la seconde extrémité (1.3.2) ;
- un deuxième état de coupure dans lequel l'élément conducteur (1.3) a été fondu parce qu'il a atteint la température de fusion ou une température supérieure à la température de fusion, ce qui entraîne la coupure de l'élément conducteur, empêchant le passage du courant.
